# EUROPÄISCHE PATENTANMELDUNG

(11) **EP 2 442 081 A1**
(43) Veröffentlichungstag der Anmeldung: **18.04.2012**
(21) Anmeldenummer: 10013727.2
(22) Anmeldetag: 18.10.2010
(51) Int. Cl.: G01K 7/18

(54) **Temperatursensor**

(71) Anmelder: Sefar AG, 9140 Heiden (CH)
(72) Erfinder: Lochèr, Ivo, 6300 Zug (CH); Rumpf, Sebastian, 9425 Thal (CH)
(74) Vertreter: Wunderlich, Rainer

(57) **Zusammenfassung**

Die Erfindung betrifft einen Temperatursensor, bei dem eine Mehrzahl von elektrisch leitfähigen Messdrähten (12) in ein Textil (40) eingearbeitet und elektrisch leitend miteinander verbunden sind, wobei zum Bestimmen einer Temperatur entlang einer Fläche des Textils die Messdrähte an eine Messeinrichtung anschließbar sind, mit welcher ein elektrischer Widerstand der Messdrähte bestimmbar ist.

## Beschreibung

Die Erfindung betrifft einen Temperatursensor, insbesondere zum Messen einer Temperatur eines Textils, nach dem Oberbegriff des Anspruchs 1.

Bekannte Temperatursensoren messen eine Temperatur punktuell an einer spezifischen Stelle. Zur Bestimmung einer Durchschnittstemperatur einer Fläche werden mehrere Temperatursensoren auf der Fläche platziert und es wird rechnerisch eine Durchschnittstemperatur gebildet.

Der Erfindung liegt die **Aufgabe** zugrunde, einen Temperatursensor bereitzustellen, mit welchem auf einfache Weise eine Temperatur entlang einer Fläche eines Textils bestimmt werden kann.

Die Aufgabe wird mit einem Temperatursensor mit den Merkmalen des Anspruchs 1 gelöst. Bevorzugte Ausführungsformen und Varianten der Erfindung sind in den abhängigen Ansprüchen angegeben.

Der erfindungsgemäße Temperatursensor ist dadurch gekennzeichnet, dass eine Mehrzahl von elektrisch leitfähigen Messdrähten in ein Textil eingearbeitet und elektrisch leitend miteinander verbunden sind und dass zum Bestimmen einer Temperatur entlang einer Fläche des Textils die Messdrähte an eine Messeinrichtung anschließbar sind, mit welcher ein elektrischer Widerstand der Messdrähte bestimmbar ist.

Ein Grundgedanke der Erfindung besteht darin, einen Temperatursensor oder Messwertaufnehmer bereitzustellen, mit dem direkt eine Durchschnittstemperatur einer Fläche bestimmt werden kann. Hierzu sind nicht mehrere einzelne Sensoren erforderlich, deren Ausgang rechnerisch gemittelt wird, sondern die durchschnittliche Flächentemperatur beziehungsweise ein Signal hierfür wird automatisch durch den einen Temperatursensor bereitgestellt.

Zu diesem Zweck sind entlang der Fläche des Textils mehrere elektrisch leitfähige Messdrähte eingebracht und miteinander elektrisch leitend verbunden. Durch die Messung eines elektrischen Widerstands der Messdrähte wird auf die mittlere Temperatur der des Textils oder des Bereichs des Textils, entlang welcher die Messdrähte angeordnet sind, geschlossen. Der Temperatursensor kann somit als flächiger Temperatursensor bezeichnet werden.

Ein weiterer Grundgedanke der Erfindung besteht darin, einen Teil des Textils selbst als Sensor zu verwenden. Hierzu ist zumindest ein Teil der Garne des Textils in Form von Messdrähten oder Messgarnen ausgeführt. Die Messdrähte oder Messgarne sind vorzugsweise entweder nur in Kettrichtung oder nur in Schussrichtung vorgesehen.

Zur Bestimmung der Temperatur wird der elektrische Widerstand in den Messdrähten in der Messeinrichtung mittels einer Messelektronik in eine Temperatur umgerechnet. Um eine erhöhte Sensitivität bei der Messung zu erreichen, ist es bevorzugt, dass die Messdrähte in Serie geschaltet sind. Die Messelektronik zur Bestimmung der Temperatur kann durch die höhere Sensitivität weniger aufwändig gestaltet werden.

Zur Bereitstellung der elektrischen Leitfähigkeit der Messdrähte ist es bevorzugt, dass die Messdrähte ein Metall oder eine Keramik aufweisen. Die Messdrähte können insbesondere Kupfer, Stahl, Bronze, Silber und/oder verschiedene andere Legierungen enthalten. Typische Metalle haben einen Temperaturkoeffizienten von etwa 0,4% pro Kelvin. Gesinterte Materialien, insbesondere Keramiken mit einem höheren Temperaturkoeffizienten, können ebenfalls als Leitermaterialien verwendet werden.

Eine bevorzugte Ausgestaltung der Erfindung besteht darin, dass die Messedrähte einen Durchmesser von 0,02 bis 0,1 mm aufweisen. Der Drahtabstand liegt vorzugsweise im Bereich von etwa 2 mm.

Um die Eigenschaften des Textils durch die Messdrähte möglichst wenig zu beeinflussen, ist es bevorzugt, dass die Messdrähte flexibel sind. In einer bevorzugten Ausgestaltung der Erfindung handelt es sich bei den Messdrähten um elektrisch leitfähige Garne, welche als Messgarne bezeichnet werden können.

Um einen feuchtigkeitgeschützten Sensor bereitzustellen, ist es bevorzugt, dass die Messdrähte oder Messgarne elektrisch isoliert sind. Dies kann beispielsweise durch eine Lackisolierung erfolgen. Das Textil ist trotz der Lackisolierung der einzelnen Messdrähte oder Garne luftdurchlässig und ermöglicht einen Feuchtigkeitsaustausch.

In einer weiteren bevorzugten Ausgestaltung ist vorgesehen, dass die Messdrähte einen Isolator als Kern aufweisen, welcher von einem elektrisch leitfähigen Draht umgeben, insbesondere umwunden, ist. Der Isolator kann beispielsweise Polyethylenterephthalat (PET) enthalten oder aus diesem bestehen.

Das Textil ist vorzugsweise gewoben, gewirkt, gestrickt oder gelegt. Die Messdrähte können beispielsweise direkt, in umwundener Form, zum Beispiel PET-Kern mit Draht umwunden, oder in Tinsel-Form in das Textil eingebracht werden. Bei der Tinsel-Form handelt es sich um ein leonisches Gespinst. Dabei ist ein Kern-Mantelgarn mit einem Kern aus einem oder mehreren Textilfäden vorgesehen, welches mit einer dünnen Metallfolie umwunden oder umsponnen ist.

Eine besonders vorteilhafte elektrische Kontaktierung der Messdrähte kann dadurch bereitgestellt werden, dass die Messdrähte mittels mindestens einer, insbesondere strukturierten, flexiblen Leiterplatte miteinander verbunden sind. Die Verbindung zwischen Leiterplatte und Messdraht kann insbesondere mittels Schweißung und/oder Lötung erfolgen.

Die Leiterplatte kann eine Mehrzahl von Messdrähten miteinander verbinden. In einer bevorzugten Ausgestaltung ist für jede Verbindung von zwei Messdrähten eine eigene Verbindungseinrichtung vorhanden, die auf die Leiterplatte aufgebracht ist. Die Verbindungseinrichtung, welche auch als Anschlusspad bezeichnet werden kann, kann dabei besonders einfach aufgebaut sein und insbesondere eine einfache elektrisch leitfähige Platte oder Folie aufweisen. Diese kann beispielsweise Gold, Silber, Kupfer oder andere leitfähige Materialien enthalten.

Für einen feuchtigkeitsgeschützten Temperatursensor ist es bevorzugt, dass die flexible Leiterplatte elektrisch isoliert ist. Zur Kontaktierung der Messdrähte ist an der entsprechend gebildeten Kontaktstelle die Isolierung entfernt. Dies kann beispielsweise durch Anwendung von Druck und/oder Wärme erfolgen.

In entsprechender Weise ist auch eine gegebenenfalls an den Messdrähten vorhandene Isolierung an den Kontaktstellen entfernt. Durch eine Isolierung der Messdrähte und der Leiterplatten kann ein insgesamt feuchtigkeitsgeschützter Temperatursensor bereitgestellt werden.

Zur Vermeidung von Thermospannungen, welche das Messergebnis verfälschen würden, ist es erfindungsgemäß bevorzugt, dass die Anzahl der Verbindungsstellen zwischen Messdraht und Leiterplatte geradzahlig ist. Auftretende Thermospannungen zwischen Messdraht und Leiterplatte heben sich so gegenseitig auf, jedenfalls wenn an den entsprechenden Übergängen im Mittel dieselbe Temperatur vorliegt.

Damit sich gegebenenfalls eingekoppelte Störungen gegenseitig aufheben und das Messergebnis nicht beeinflussen, ist es zudem bevorzugt, dass bei der Messdrahtführung große Schleifen vermieden werden. Besonders bevorzugt ist es, dass die Messdrähte, insbesondere ausschließlich, parallel zueinander verlegt sind. Dies kann in vorteilhafter Weise in Verbindung mit einer oder mehreren Leiterplatten erzielt werden, wie vorstehend beschrieben. Dabei kann zwischen jeweils zwei parallel zueinander angeordneten Messdrähten eine im Wesentlichen quer zu diesen angeordnete Leiterplatte vorgesehen sein.

Als zusätzliche oder alternative Möglichkeit zur Abschirmung von Störstrahlungen kann ein Abschirmgewebe vorgesehen sein. Hierbei kann es sich beispielsweise um ein metallisiertes Textil, also ein Textil mit metallischen Drähten, handeln, das auf das Messtextil aufgebracht ist.

Auch bei einem gegebenenfalls angeschlossenen Anschlusskabel oder einer Anschlussleitung sind Schleifen vorzugsweise zu vermeiden. Erfindungsgemäß ist es bevorzugt, dass eine Anschlussleitung vorgesehen ist, welche eine Twisted-Pair-Leitung, eine Zwillingslitze oder ein Koaxialkabel ist.

Die Erfindung betrifft weiterhin die Verwendung eines Textils mit einer Mehrzahl von darin eingearbeiteten elektrisch leitefähigen Messdrähten zum Bestimmen einer Temperatur einer Fläche des Textils.

Weiterhin betrifft die Erfindung ein Widerstandsthermometer mit einem Temperatursensor, wie vorstehend beschrieben, und einer Messeinrichtung zum Messen eines elektrischen Widerstands der in das Textil eingearbeiteten Messdrähte. Die Messeinrichtung weist eine Messelektronik auf, die aus dem elektrischen Widerstand des Temperatursensors eine mittlere Temperatur des Textils bestimmt. Temperatursensor und Messeinrichtung bilden eine Messvorrichtung.

Mit der Erfindung wird ein besonders einfaches Messen der Temperatur eines Textils, ohne das Erfordernis einer Vielzahl von Sensoren, ermöglicht. Bei dem Textil kann es sich insbesondere um ein Filtermedium handeln.

Die Erfindung wird nachfolgend anhand von bevorzugten Ausführungsbeispielen, die schematisch in den Zeichnungen dargestellt sind, weiter beschrieben. In den Zeichnungen zeigt:
Fig. 1 eine erste Ausführungsform eines erfindungsgemäßen Temperatursensors;
Fig. 2 eine zweite Ausführungsform eines erfindungsgemäßen Temperatursensors und
Fig. 3 eine dritte Ausführungsform eines erfindungsgemäßen Temperatursensors.

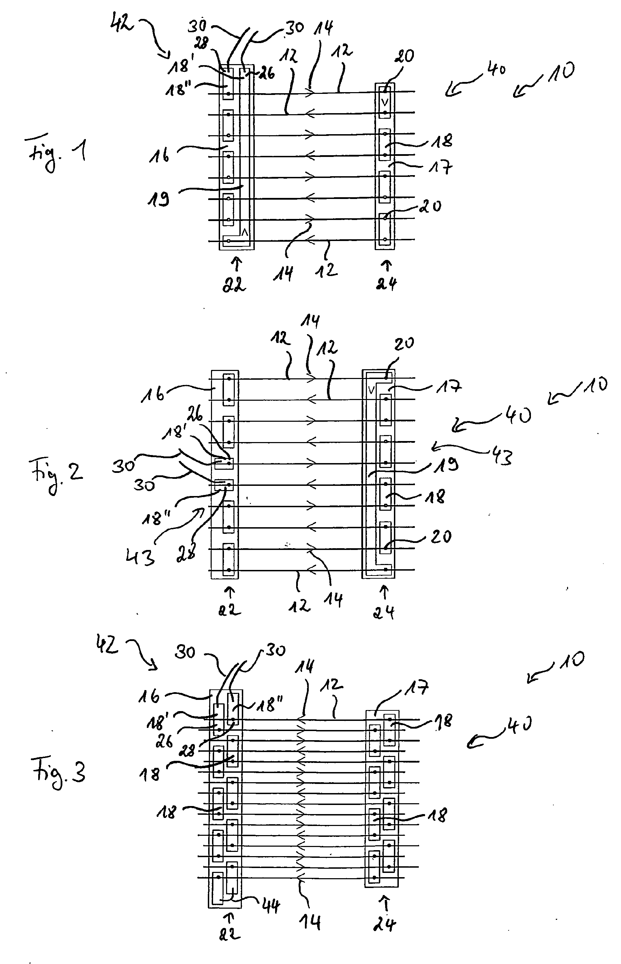

Unterschiedliche Varianten eines erfindungsgemäßen Temperatursensors 10 sind in den Figuren 1 bis 3 dargestellt. Der Temperatursensor 10 umfasst mehrere Messgarne 12, die in ein Textil 40 eingearbeitet sind. Bei dem Textil 40 handelt es sich beispielsweise um ein Gewebe, in das die Messgarne 12 eingewebt sind. Alternativ kann es sich bei dem Textil auch um ein Gestrick oder ein Gewirk handeln.

Für eine flächenhafte Temperaturmessung an dem Textil 40 erstrecken sich die Messgarne 12 entlang einer Fläche des Textils 40, vorzugsweise im Wesentlichen über die gesamte Fläche des zu vermessenden Textils 40.

Die einzelnen Messgarne 12 sind parallel zueinander angeordnet und an ihren jeweiligen Längsenden leitend mit einem weiteren Messgarn 12 verbunden, so dass sich insgesamt eine Messleitung ergibt. Die Messgarne 12 sind also in Serie angeordnet.

An die beiden Enden der Messleitung wird über zwei Anschlussleitungen 30 oder Anschlusskabel ein Messeinrichtung angeschlossen, welches über eine Widerstandsänderung in der Messleitung beziehungsweise den in Reihe geschalteten Messgarnen 12 eine Temperaturänderung ermitteln kann.

Die einzelnen Messgarne 12 werden mittels einer oder mehrerer flexibler Leiterplatten 16, 17, sogenannte FPCs oder Flexprints, leitend miteinander verbunden. Die Leiterplatten 17 sind in zwei Reihen 22, 24 angeordnet. Eine erste Leiterplatte 16 kontaktiert ein erstes Ende der Messgarne 12 und eine zweite Leiterplatte 17 kontaktiert ein zweites Ende der Messgarne 12.

Auf den Leiterplatten 16, 17 sind eine Mehrzahl von Anschlusspads 18 für die Kontaktierung der Messgarne 12 angeordnet. Die Anschlusspads 18, welche allgemein auch als Verbindungseinrichtungen bezeichnet werden können, dienen dazu, die Messgarne 12 in einer gewünschten Weise zu verschalten. Die Anschlusspads können in Form einer dünnen Platte oder Folie, beispielsweise als Kupferplatte oder Kupferfolie ausgebildet sein.

Zur Kontaktierung von zwei Messgarnen 12 ist vorzugsweise jeweils ein Anschlusspad 18 vorgesehen, wie in den Figuren 1 bis 3 dargestellt.

Am Übergang des jeweiligen Messgarns 12 zum Anschlusspad 18 ist eine elektrische Kontaktstelle 20 gebildet. Jedes Anschlusspad 18, das zwei Messgarne 12 miteinander verbindet, weist also zwei Kontaktstellen 20 auf. Zur Kontaktierung ist bei dem Messgarn 12 an der Kontaktstelle 20 eine gegebenenfalls vorhandene Isolierung entfernt. Weiter ist auch an der Leiterplatte 16, 17 beziehungsweise dem Anschlusspad 18 eine dort gegebenenfalls vorhandene Isolierung entfernt.

Die Messleitung beginnt an einem ersten Ende in Richtung des Messstromes mit einem ersten Anschlusspad 18', an das eine erste Anschlussleitung 30 für die Messeinrichtung angeschlossen ist. Die Messstromrichtung ist mit Pfeilen 14 gekennzeichnet. Mit dem ersten Anschlusspad 18' ist ein erstes Messgarn 12' verbunden. Über eine Mehrzahl von weiteren Anschlusspads 18 und weiteren Messgarnen 12 verläuft die Messleitung zu einem letzten Messgarn 12" und von dort zu einem letzten Anschlusspad 18". An das letzte Anschlusspad 18" ist eine zweite Anschlussleitung 30 für die Messeinrichtung angeschlossen.

Das erste Anschlusspad 18' und das letzte Anschlusspad 18", an die die Messeinrichtung angeschlossen wird, weisen jeweils einen Anschlussbereich 26, 28 auf, an die die Messeinrichtung, insbesondere über die Anschlussleitungen 30, angeschlossen werden kann. Die Anschlussbereiche 26, 28 der Anschlusspads 18', 18" sind benachbart zueinander angeordnet, um den Anschluss der Messeinrichtung zu vereinfachen. Insbesondere ist vorgesehen, dass die Anschlusspads 18', 18" im Bereich der Anschlussbereiche 26, 28 unmittelbar zueinander benachbart sind.

Für den Anschluss der Messeinrichtung an benachbarte Anschlusspads 18 weist die Messleitung eine Hinführung und eine Rückführung auf. Die Hinführung erstreckt sich ausgehend von einem ersten Anschlussbereich 26 von diesem weg. Die Rückführung erstreckt sich in Richtung eines zweiten Anschlussbereiches 28.

Die Figuren 1 bis 3 zeigen unterschiedliche Varianten der Leitungsführung und Kontaktierung der Messgarne 12.

Fig. 1 zeigt eine Ausführungsform, bei der die Messeinrichtung an einen Eckbereich 42 des Textils 40 angeschlossen werden kann. Die parallel angeordneten Messgarne 12 sind an ihren Enden jeweils über eine Leiterplatte 18 jeweils mit einem entsprechenden Ende eines benachbarten Messgarns 12 verbunden.

Die Hinführung der Messleitung erfolgt über ein Distanz-Anschlusspad 19, welches den ersten Anschlussbereich 26 mit einem gegenüberliegenden Ende des Textils 40 verbindet. Das Distanz-Anschlusspad 19, welches das erste Anschlusspad 18' bildet, verläuft dabei ausgehend von dem ersten Anschlussbereich 26 ohne weitere Kontaktierung quer zu einer Mehrzahl von Messgarnen 12 bis zum einem ersten Messgarn 12', welches an einem dem ersten Anschlussbereich 26 gegenüberliegenden Abschnitt des Textils 40 angeordnet ist. Die Rückführung erfolgt über eine Mehrzahl von Messgarnen 12 und Anschlusspads 18 bis zum letzten Anschlusspad 18". Hinführung und Rückführung können selbstverständlich vertauscht sein.

In Fig. 2 zeigt eine Ausführungsform, bei der die Messeinrichtung an eine Randseite 43 des Textils 40 angeschlossen werden kann. Das erste Anschlusspad 18' und das letzte Anschlusspad 18" befinden sich hierzu in einem mittleren Abschnitt einer der Randseiten 43 des Textils.

Die Messleitung erstreckt sich als Hinführung ausgehend von dem ersten Anschlusspad 18' zunächst in einen ersten Flächenabschnitt des Textils 40. Ein Distanz-Anschlusspad 19 verbindet den ersten Flächenabschnitt des Textils 40 mit einem zweiten Flächenabschnitt, welcher sich ausgehend von den Anschlussbereichen 26, 28 in eine andere Richtung als der erste Flächenabschnitt erstreckt. Das Distanz-Anschlusspad 19 verläuft hierzu ohne Kontaktierung quer zu einer Reihe von Messgarnen 12. Die Rückführung erstreckt sich ausgehend von dem Distanz-Anschlusspad 19 in Richtung des zweiten Anschlussbereiches 28 des letzten Anschlusspads 18". Das Distanz-Anschlusspad 19 ist also in einem mittleren Bereich der Messleitung zwischen Hinführung und Rückführung angeordnet.

Fig. 3 zeigt eine weitere Ausführungsform, bei der die Messeinrichtung an einen Eckbereich 42 des Textils 40 angeschlossen werden kann. Im Unterschied zu der Ausführungsform gemäß Fig. 1 erfolgt die Hinführung der Messleitung zu dem gegenüberliegenden Ende des Textils 40 nicht über ein Distanz-Anschlusspad 19, sondern über eine zweite Serie von in Reihe geschalteten Anschlusspads 18 und Messgarnen 12. Damit eine geschlossene Messleitung entsteht, muss lediglich das letzte Anschlusspad 18 der Hinführung mit dem ersten Anschlusspad der Rückführung verbunden werden. Dies kann über eine Leiterbrücke 44 erfolgen.

## Patentansprüche

1. Temperatursensor,
**dadurch gekennzeichnet,**
**dass** eine Mehrzahl von elektrisch leitfähigen Messdrähten (12) in ein Textil (40) eingearbeitet und elektrisch leitend miteinander verbunden sind und dass zum Bestimmen einer Temperatur entlang einer Fläche des Textils (40) die Messdrähte (12) an eine Messeinrichtung anschließbar sind, mit welcher ein elektrischer Widerstand der Messdrähte (12) bestimmbar ist.

2. Temperatursensor nach Anspruch 1,
**dadurch gekennzeichnet,**
**dass** die Messdrähte (12) in Serie geschaltet sind.

3. Temperatursensor nach Anspruch 1 oder 2,
**dadurch gekennzeichnet,**
**dass** die Messdrähte (12) ein Metall oder eine Keramik aufweisen.

4. Temperatursensor nach einem der Ansprüche 1 bis 3,
**dadurch gekennzeichnet,**
**dass** die Messdrähte (12) einen Durchmesser von 0,02 bis 0,1 mm aufweisen.

5. Temperatursensor nach einem der Ansprüche 1 bis 4,
**dadurch gekennzeichnet,**
**dass** die Messdrähte (12) elektrisch isoliert sind.

6. Temperatursensor nach einem der Ansprüche 1 bis 5,
**dadurch gekennzeichnet,**
**dass** die Messdrähte (12) einen Isolator als Kern aufweisen, welcher von einem elektrisch leitfähigen Draht umwunden ist.

7. Temperatursensor nach einem der Ansprüche 1 bis 6,
**dadurch gekennzeichnet,**
**dass** das Textil (40) gewoben, gewirkt, gestrickt oder gelegt ist.

8. Temperatursensor nach einem der Ansprüche 1 bis 7,
**dadurch gekennzeichnet,**
**dass** die Messdrähte (12) mittels mindestens einer flexiblen Leiterplatte (16, 17) miteinander verbunden sind.

9. Temperatursensor nach Anspruch 8,
**dadurch gekennzeichnet,**
**dass** die flexible Leiterplatte (16, 17) elektrisch isoliert ist.

10. Temperatursensor nach einem der Ansprüche 8 oder 9,
**dadurch gekennzeichnet,**
**dass** die Anzahl der Verbindungsstellen zwischen Messdraht (12) und Leiterplatte (16, 17) geradzahlig ist.

11. Temperatursensor nach einem der Ansprüche 1 bis 10,
**dadurch gekennzeichnet,**
**dass** die Messdrähte (12) parallel zueinander verlegt sind.

12. Temperatursensor nach einem der Ansprüche 1 bis 11,
**dadurch gekennzeichnet,**
**dass** ein Abschirmgewebe vorgesehen ist.

13. Temperatursensor nach einem der Ansprüche 1 bis 12,
**dadurch gekennzeichnet,**
**dass** eine Anschlussleitung (30) vorgesehen ist, welche eine Twisted-Pair-Leitung, eine Zwillingslitze oder ein Koaxialkabel ist.

14. Verwendung eines Textils (40) mit einer Mehrzahl von darin eingearbeiteten elektrisch leitfähigen Messdrähten (12) zum Bestimmen einer Temperatur entlang einer Fläche des Textils (40).

15. Widerstandsthermometer mit einem Temperatursensor (10) nach einem der Ansprüche 1 bis 13 und einer Messeinrichtung zum Messen eines elektrischen Widerstands der in das Textil (40) eingearbeiteten Messdrähte (12).
